# EUROPEAN PATENT APPLICATION

(11) **EP 4 775 922 A1**
(43) Date of publication of application: **15.07.2026**
(21) Application number: 24862943.8
(22) Date of filing: 04.03.2024
(51) Int. Cl.: F42B 3/113, F42C 19/08, F42B 5/16, H01S 3/00, F42B 5/38

(54) **LASER IGNITION DEVICE**

(30) Priority: 04.09.2023 KR 20230116679
(71) Applicant: Agency For Defense Development, Daejeon 34060 (KR)
(72) Inventor: OH, Yun Jung, Daejeon 34060 (KR); AHN, Sang Tae, Daejeon 34060 (KR); LEE, Yong Seon, Daejeon 34060 (KR)
(74) Representative: Winter, Brandl - Partnerschaft mbB
(86) International application number: PCT/KR2024/002730
(87) International publication number: WO 2025/053359

(57) **Abstract**

A laser ignition device according to one embodiment of the present invention comprises: an ignition nozzle through which a flame, generated by the ignition of an igniter ignited by a laser beam, moves; an adapter coupled to one side of a propulsion charge; and a fixing member for fixing the ignition nozzle to the adapter, wherein the ignition nozzle can guide the flame so that the flame reaches the propulsion charge.

## Description

### TECHNICAL FIELD

The following description relates to a laser ignition device.

### BACKGROUND ART

An existing modular propellant charge used in self-propelled guns features a cylindrical passage along the central axis to facilitate the propagation of a flame generated from a detonator during firing. This structure is optimized for existing detonator-type firing systems. However, recent advancements in laser system technology and the resulting technological advantages have led to ongoing efforts in various civilian and military sectors to replace existing ignition systems with laser ignition systems. Through various recent studies, a series of systems have been built to perform combustion tests using laser ignition under various pressure conditions, and simultaneously measure/analyze the scattered laser beam to provide feedback regarding combustion characteristics. It appears that such systems can be applied to various combustion systems such as aircraft/automobile engines, contributing to efficiently shortening analysis and development times. Laser ignition is also expected to be utilized in liquid rocket engines. This system enables stable operation in harsh high-altitude atmospheric and space environments and offers the advantage of being able to align the irradiation location based on the combustion chamber environment and igniter position. Furthermore, research on high-efficiency laser ignition devices has proposed the idea of combining the beam generated from a single emitter in a multi-chip configuration using a focusing lens and converting it into output light through a pump fiber.

As described above, laser ignition methods are being attempted in various fields and offer numerous advantages, such as 1) the ability to precisely control the targeted ignition position in combustion systems with a complex mechanism based on the combustion chamber geometry and propellant distribution (e.g., local concentration variations within the space during liquid/gas stratified combustion, solid propellant geometry, etc.) and 2) the ability to configure the combustion system as a sealed system by placing a high-strength transparent window capable of transmitting the laser beam between the ignition system and the combustion system, which may enhance system safety and reduce direct damage to the ignition system caused by exposure to harsh operating conditions (high pressure/high temperature). However, laser ignition systems have limitations, such as the requirement for fuel and operating environment compliance and the inability to be applied to energy sources with low ignition potential. While advantageous for targeting narrow combustion points, laser ignition systems are difficult to directly apply to systems requiring rapid, wide-area ignition. Furthermore, the implementation of laser ignition systems requires significant design and manufacturing additions and modifications, making them difficult to implement.

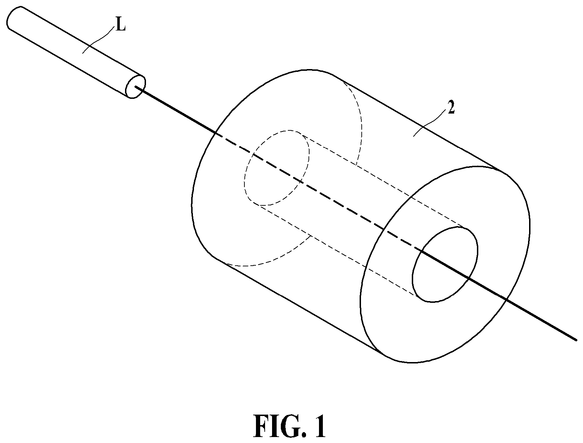

A propellant charge 2 typically introduced in Korea is a hollow cylindrical shape with a hollow center. Thus, when a laser L is directed toward the center of the propellant charge 2, as shown in FIG. 1, a laser beam emitted from the laser L during operation may not ignite but penetrate the propellant charge 2. In addition, the propellant charge 2 is basically designed to be ignited by flame energy from the detonation of the primer. Thus, when the existing ignition system (a detonator type) is changed to a laser ignition system, there is a possibility that ignition may not occur normally or may not occur at all even when contact is created between the propellant charge 2 and the laser beam. This type of problem requires a change in the ignition series or the entire ignition system and may incur significant costs during development.

Korean Patent Publication No. 10-2164993 (published on October 6, 2020) discloses a laser ignition device for a firearm.

The above description is information the inventor(s) acquired during the course of conceiving the present disclosure, or already possessed at the time, and is not necessarily art publicly known before the present application was filed.

### DISCLOSURE OF THE INVENTION

### TECHNICAL GOALS

According to an embodiment, a laser ignition device capable of being applied to an existing firearm to ignite a propellant charge without any design change.

### TECHNICAL SOLUTIONS

A laser ignition device according to an embodiment includes an ignition nozzle through which a flame, generated by a laser beam igniting an igniter, moves, an adapter coupled to one side of a propellant charge, and a fixing member configured to fix the ignition nozzle to the adapter, wherein the ignition nozzle may be configured to guide the flame to reach the propellant charge.

The ignition nozzle may include a cylindrical-shaped nozzle housing having a cavity formed therein, an ignition space, in which the igniter may be accommodated, inside the nozzle housing, a connection space communicating with the ignition space so that a flame may move from the ignition space toward the propellant charge, and a main diffusion flow path communicating with the connection space and forming an open outlet toward the propellant charge.

The ignition nozzle may further include a backfire prevention flow path that may form an inlet of the nozzle housing and may be open so that the laser beam may reach the igniter, wherein the backfire prevention flow path may be configured to prevent a flame from coming out through the inlet.

The backfire prevention flow path may include a first cavity, which may be a space communicating with the inlet, and a second cavity, which may be configured to communicate with the first cavity and may expose a portion of the igniter.

The backfire prevention flow path may further include a backfire prevention plate that may be arranged between the first cavity and the second cavity and configured to isolate the first cavity and the second cavity from each other when a flame occurs to prevent the flame from moving from the second cavity to the first cavity.

The backfire prevention flow path may be connected to an inside of the backfire prevention flow path by a hinge, and may be configured, in a state of being open toward the second cavity before a flame is generated, to be closed by increased pressure inside the second cavity when a flame is generated.

The ignition nozzle may further include an auxiliary diffusion flow path extending from an inside of the connection space and penetrating the nozzle housing.

The auxiliary diffusion flow path may be formed in plurality and may be formed to become farther from the ignition space starting from an inner side surface of the connection space toward an outer side surface of the nozzle housing.

The adapter may include an insertion portion configured to be inserted into the propellant charge and a support portion formed at a lower end of the insertion portion to have a larger outer circumference than the insertion portion and configured to limit a depth at which the insertion portion may be inserted into the propellant charge.

A diameter of the first cavity may be greater than a diameter of the laser beam.

A volume of the second cavity may be greater than a volume of the first cavity.

The connection space may include a portion of which a cross-sectional area decreases as the connection space becomes farther from the ignition space, and the main diffusion flow path may include a portion of which a cross-sectional area increases as the main diffusion flow path becomes farther from the ignition space.

### EFFECTS OF THE INVENTION

A laser ignition device according to an embodiment may be applied to an existing firearm to ignite a propellant charge without a design change.

### BRIEF DESCRIPTION OF DRAWINGS

FIG. 1 is a diagram illustrating a process of igniting a conventional propellant charge system with a laser beam.
FIG. 2 is a perspective view of a propellant charge equipped with a laser ignition device according to an embodiment.
FIG. 3 is a rear view of a propellant charge equipped with a laser ignition device according to an embodiment.
FIG. 4 is a perspective view of a laser ignition device according to an embodiment.
FIG. 5 is a front view of a laser ignition device according to an embodiment.
FIG. 6 is a side view of a laser ignition device according to an embodiment.
FIG. 7 is a cross-sectional view of an ignition nozzle according to an embodiment.

### BEST MODE FOR CARRYING OUT THE INVENTION

Hereinafter, embodiments are described in detail with reference to the illustrative drawings. Regarding the reference numerals assigned to the components in the drawings, it should be noted that the same components are designated by the same reference numerals, wherever possible, even though they are shown in different drawings. Also, in the description of the embodiments, detailed description of well-known related structures or functions is omitted when it is deemed that such description will cause ambiguous interpretation of the present disclosure.

In addition, in the description of the components of the embodiments, terms such as first, second, A, B, (a), (b), and the like may be used. These terms are used only for the purpose of discriminating one component from another component, and the nature, the sequences, the orders, or the like of the components are not limited by the terms. It is to be understood that when a component is described as being "connected," "coupled," or "joined" to another component, the former may be directly "connected," "coupled," or "joined" to the latter or "connected," "coupled," or "joined" to the latter via another component.

The same name may be used to describe components having the same function, which are included in different embodiments. Unless otherwise mentioned, the description of one embodiment may be applicable to another embodiment. Thus, duplicated description is omitted for conciseness.

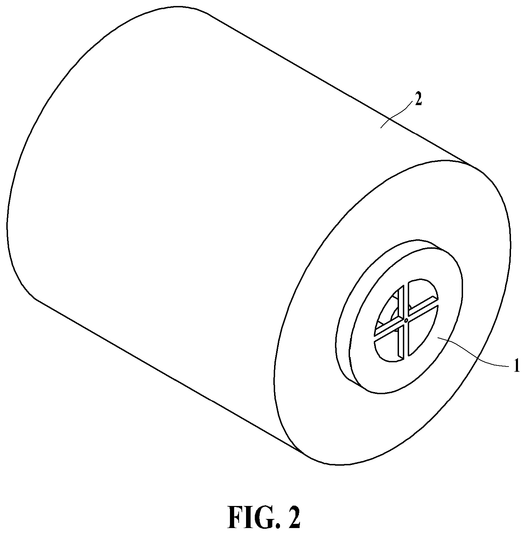

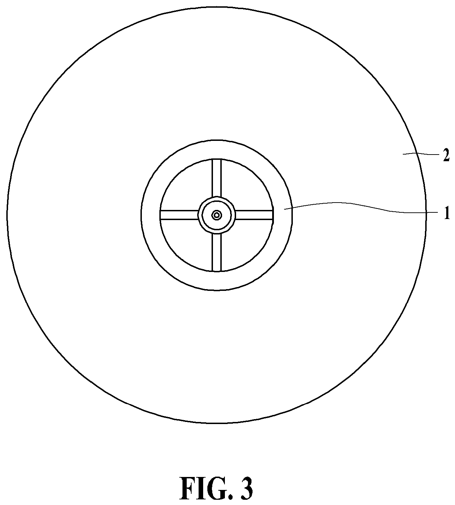

FIG. 1 is a diagram illustrating a process of igniting a conventional propellant charge system with a laser beam, FIG. 2 is a perspective view of a propellant charge equipped with a laser ignition device according to an embodiment, and FIG. 3 is a rear view of a propellant charge equipped with a laser ignition device according to an embodiment.

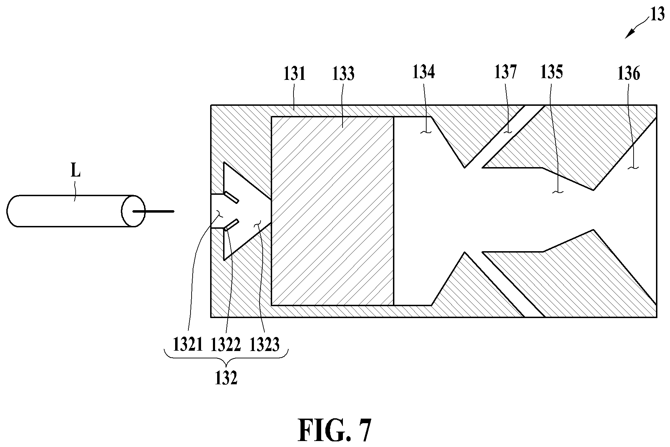

Referring to FIGS. 1 to 3, a laser ignition device 1 may be applied to an existing firearm to ignite the propellant charge 2 without design changes. The propellant charge 2 illustrated in FIG. 1 is a form of the propellant charge 2 generally introduced domestically, which has a hollow cylindrical shape with an empty center. As shown in FIG. 1, a laser beam emitted from the laser L may not ignite but penetrate the propellant charge 2. Thus, when the laser ignition device 1 is equipped on the propellant charge 2 as shown in FIGS. 2 and 3, the laser L may not penetrate the propellant charge 2 but ignite an igniter 133 (see FIG. 7) to generate a flame and consequently to ignite the propellant charge 2. Through this configuration, a laser ignition method may be applied to existing firearms, and advantages of a laser ignition system, such as precise ignition position control and high system stability, may be obtained without design changes.

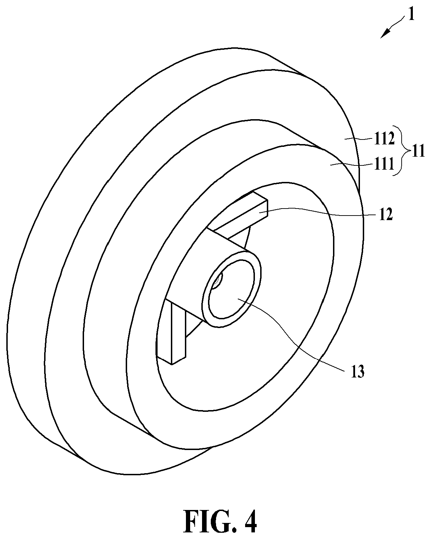

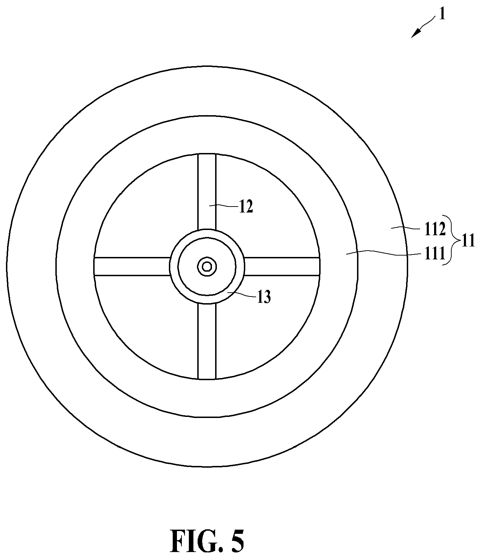

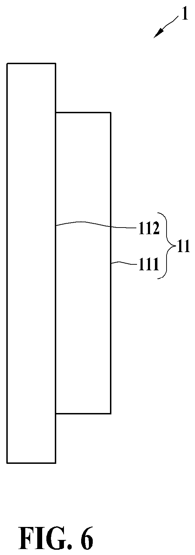

FIG. 4 is a perspective view of a laser ignition device according to an embodiment, FIG. 5 is a front view of a laser ignition device according to an embodiment, and FIG. 6 is a side view of a laser ignition device according to an embodiment.

Referring to FIGS. 4 to 6, the laser ignition device 1 may include, for example, an ignition nozzle 13, an adapter 11, and a fixing member 12.

An ignition nozzle 13 is a portion through which a flame, generated by a laser beam igniting an igniter, moves. The ignition nozzle 13 may guide the flame to reach the propellant charge 2.

The adapter 11 may be a portion coupled to one side of the propellant charge 2. The adapter 11 may be a portion attached or coupled to one side of the propellant charge 2 so that an ignition method using the laser L may be implemented. For example, the adapter 11 may include an insertion portion 111 and a support portion 112.

The insertion portion 111 may be a portion inserted into the propellant charge 2. A diameter of the insertion portion 111 may be equal to or less than a diameter of an empty space of the propellant charge 2. When the diameter of the insertion portion 111 is equal to the diameter of the empty space of the propellant charge 2, the adapter 11 may be coupled to the propellant charge 2 by a fit method.

The support portion 112 may be formed at a lower end of the insertion portion 111 to have a larger outer circumference than the insertion portion 111 and may thus limit a depth at which the insertion portion 111 may be inserted into the propellant charge 2. A diameter of the support portion 112 may be greater than the diameter of the empty space of the propellant charge 2 to solve the problem of the adapter 11 itself entering an inside of the propellant charge 2 and not being fixed in position. According to this structure, the adapter 11 may be easily attached to and detached from the propellant charge 2.

The fixing member 12 may fix the ignition nozzle 13 to the adapter 11. For example, the fixing member 121 may positionally fix the ignition nozzle 13 relative to the adapter 11 via a plurality of members.

FIG. 7 is a cross-sectional view of an ignition nozzle according to an embodiment.

Referring to FIG. 7, the ignition nozzle 13 may include, for example, a nozzle housing 131, an ignition space 134, a connection space 135, a main diffusion flow path 136, a backfire prevention flow path 132, and an auxiliary diffusion flow path 137.

The nozzle housing 131 may have a cylindrical shape with a cavity formed therein. The nozzle housing 131 may be formed of a heat-resistant material, and through a cavity therein, a laser beam may move and ignite an igniter 133, and a flame may move.

The ignition space 134 may be a space, in which the igniter 133 may be accommodated, inside the nozzle housing 131. For example, the ignition space 134 may have a larger cross-sectional area than the connection space 135, and through this configuration, greater pressure may be formed upon ignition.

The connection space 135 may be a space connected to the ignition space 134 so that the flame may move from the ignition space 134 toward the propellant charge 2. The connection space 135 may include a portion of which a cross-sectional area decreases as the connection space 135 becomes farther from the ignition space 134.

The main diffusion flow path 136 may communicate with the connection space 135 and form an open outlet toward the propellant charge 2. The main diffusion flow path 136 may include a portion of which a cross-sectional area increases as the main diffusion flow path 136 becomes farther from the ignition space 134. In this configuration, there is an advantage in that the propellant charge 2 may be ignited as a whole since the flame may be sprayed to both sides at the same time as the flame is discharged.

The auxiliary diffusion flow path 137 may extend from an inside of the connection space 135 and penetrate the nozzle housing 131. For example, the auxiliary diffusion flow path 137 may be formed in plurality and may be formed so that the auxiliary diffusion flow path 137 may become farther from the ignition space 134 starting from an inner side surface of the connection space 135 toward an outer side surface of the nozzle housing 131. Through this configuration, the flame may move not only in a longitudinal direction of the propellant charge 2, but also toward a side surface of the propellant charge 2, so there may be an advantage in that the propellant charge 2 may be ignited as a whole.

The backfire prevention flow path 132 may be a portion that forms an inlet of the nozzle housing 131 and that is open to allow the laser beam to reach the igniter 133. The backfire prevention flow path 132 may guide the flame to move in one direction. That is, the backfire prevention flow path 132 may prevent the flame from coming out through the inlet. For example, the backfire prevention flow path 132 may include a first cavity 1321, a backfire prevention plate 1322, and a second cavity 1323.

The first cavity 1321 may be a space communicating with the inlet. The laser beam may be irradiated into the first cavity 1321 through the inlet. For example, a diameter of the first cavity 1321 may be greater than a diameter of the laser beam.

The second cavity 1323 may communicate with the first cavity 1321 and expose a portion of the igniter 133. The laser beam irradiated into the first cavity 1321 may travel into the second cavity 1323 and ignite the igniter 133 by interacting with a portion of the igniter 133 which is exposed. For example, a volume of the second cavity 1323 may be greater than a volume of the first cavity 1321. Through this structure, as is described below, when the first cavity 1321 and the second cavity 1323 are isolated from each other by the backfire prevention plate 1322, the flame may be blocked within the second cavity 1323 having a larger volume, making the structure advantageous in space utilization.

The backfire prevention plate 1322 may be arranged between the first cavity 1321 and the second cavity 1323 and may isolate the first cavity 1321 and the second cavity 1323 when a flame occurs, thereby preventing the flame from moving from the second cavity 1323 to the first cavity 1321. For example, the backfire prevention plate 1322 may be connected to an inside of the backfire prevention flow path 132 by a hinge, and in a state of being open toward the second cavity 1323 before a flame is generated, the backfire prevention plate 1322 may be closed by increased pressure inside the second cavity 1323 when a flame is generated. For example, the backfire prevention plate 1322 may be configured as a pair of plates connected by a hinge at positions facing each other on the inside of the backfire prevention flow path 132. For example, the hinge may be elastically connected, may be closed by pressure due to a flame, and may move the backfire prevention plate 1322 into an open state by an elastic force after the propellant charge 2 is ignited and detonated.

Although the embodiments have been described with reference to the limited number of drawings, it will be apparent to one of ordinary skill in the art that various modifications and variations may be made to the embodiments. For example, suitable results may be achieved if the described techniques are performed in a different order and/or if components in a described architecture, device, and the like are combined in a different manner and/or replaced or substituted by other components or their equivalents.

## Claims

1. A laser ignition device comprising:
an ignition nozzle through which a flame, generated by a laser beam igniting an igniter, moves;
an adapter coupled to one side of a propellant charge; and
a fixing member configured to fix the ignition nozzle to the adapter,
wherein the ignition nozzle is configured to guide the flame to reach the propellant charge.

2. The ignition device of claim 1, wherein the ignition nozzle comprises:
a cylindrical-shaped nozzle housing having a cavity formed therein;
an ignition space, in which the igniter is accommodated, inside the nozzle housing;
a connection space communicating with the ignition space so that a flame moves from the ignition space toward the propellant charge; and
a main diffusion flow path communicating with the connection space and forming an open outlet toward the propellant charge.

3. The laser ignition device of claim 2, wherein the ignition nozzle further comprises:
a backfire prevention flow path that forms an inlet of the nozzle housing and is open so that the laser beam reaches the igniter,
wherein the backfire prevention flow path is configured to prevent a flame from coming out through the inlet.

4. The laser ignition device of claim 3, wherein the backfire prevention flow path comprises:
a first cavity, which is a space communicating with the inlet; and
a second cavity, which is configured to communicate with the first cavity and expose a portion of the igniter.

5. The laser ignition device of claim 4, wherein the backfire prevention flow path further comprises:
a backfire prevention plate that is arranged between the first cavity and the second cavity and configured to isolate the first cavity and the second cavity from each other when a flame occurs to prevent the flame from moving from the second cavity to the first cavity.

6. The laser ignition device of claim 5, wherein
the backfire prevention plate is connected to an inside of the backfire prevention flow path by a hinge, and is configured, in a state of being open toward the second cavity before a flame is generated, to be closed by increased pressure inside the second cavity when a flame is generated.

7. The laser ignition device of claim 2, wherein the ignition nozzle further comprises:
an auxiliary diffusion flow path extending from an inside of the connection space and penetrating the nozzle housing.

8. The laser ignition device of claim 7, wherein
the auxiliary diffusion flow path is formed in plurality and is formed to become farther from the ignition space starting from an inner side surface of the connection space toward an outer side surface of the nozzle housing.

9. The laser ignition device of claim 1, wherein the adapter comprises:
an insertion portion configured to be inserted into the propellant charge; and
a support portion formed at a lower end of the insertion portion to have a larger outer circumference than the insertion portion and configured to limit a depth at which the insertion portion is inserted into the propellant charge.

10. The laser ignition device of claim 4, wherein
a diameter of the first cavity is greater than a diameter of the laser beam.

11. The laser ignition device of claim 4, wherein
a volume of the second cavity is greater than a volume of the first cavity.

12. The laser ignition device of claim 2, wherein
the connection space comprises a portion of which a cross-sectional area decreases as the connection space becomes farther from the ignition space; and
the main diffusion flow path comprises a portion of which a cross-sectional area increases as the main diffusion flow path becomes farther from the ignition space.
